# EUROPEAN PATENT APPLICATION

(11) **EP 3 657 058 A1**
(43) Date of publication of application: **27.05.2020**
(21) Application number: 19210348.9
(22) Date of filing: 20.11.2019
(51) Int. Cl.: F16L 5/00, E04G 15/06

(54) **FORMWORK TO CREATE A CAVITY IN A CONCRETE WALL AND CONTAIN WATER PIPES**

(30) Priority: 23.11.2018 FI 20185990
(71) Applicant: Nuotube OY, 92130 Raahe (FI)
(72) Inventor: NUORALA, Mikael, 92140 Raahe (FI)
(74) Representative: Berggren Oy, Helsinki & Oulu

(57) **Abstract**

The water pipe channel includes a wall, a first end (12) with a first mouth (14), and a second end (22) with a second mouth (24). The second end includes an enlargement portion (26) into which the second mouth opens, and said second mouth is substantially larger than the first mouth. The water pipe channel is intended to be installed inside a building's wall, especially a concrete-structured wall, in such a way that the first mouth opens onto a top edge of the wall and the second mouth opens onto a wall surface of the wall approximately at the height of a plumbing fixture to be mounted on the wall. Along the water pipe channel a plastic domestic water pipe can be extended by way of the second mouth onto the wall surface.

## Description

The invention relates to a water pipe channel, including a wall, a first end with a first mouth, and a second end with a second mouth, and an enlargement portion into which the second mouth opens, and said second mouth is substantially larger than the first mouth.

Domestic water is passed from a water meter to water supply points in the apartment along domestic water pipes. The domestic water pipes can be copper pipes mountable on structure surfaces or plastic pipes installable inside protective pipes and extending within wall structures. The plastic domestic water pipes are easily installed within a frame-structured wall, but within a concrete-structured wall the installation of a plastic pipe is difficult. The concrete wall's internal surface must be first milled to form a groove, in which are placed protective pipes and angle cock boxes in alignment with a water supply point. This is followed by covering the groove and the pipes therein with plaster. The milling of grooves, installation of pipes and fill plastering of grooves is a multistage and slow work process, increasing the installation costs of domestic water pipes. In order to expedite the process, the grooves are often made as shallow as possible, whereby the domestic water pipes installed inside the groove are left near the wall surface. Hence, there is a hazard of inadvertently drilling holes in domestic water pipes as plumbing fixtures, such as shower rails, are being installed in the wet rooms.

Because of the difficulties involved in the installation of plastic pipes the domestic water pipes of wet rooms are often made with surface-mounted copper pipes. The surface mounting of copper pipes is often carried out with pipe clamps which are fastened to the wall surface with screws. The walls' moisture insulation is pierced by the fastening screws with an increased risk of moisture damage. The domestic water pipe system constructed from straight copper pipes will inevitably include a large number of elbow and extension joints, which are potential leaking points. Besides, in terms of its material the domestic water pipe of copper is clearly more expensive than the plastic domestic water pipe of equal size.

It is an objective of the invention to introduce a water pipe channel capable of reducing problems of the prior art. Objectives of the invention are attained with a water pipe channel characterized by what is presented in the independent claim. A few preferred embodiments of the invention are presented in the dependent claims.

The invention relates to a water pipe channel, including a wall, a first end with a first mouth, and a second end with a second mouth. The second mouth has an enlargement portion into which the second mouth opens and said second mouth is substantially larger than the first mouth. The water pipe channel segment between the first end and the enlargement portion is substantially straight and rigid.

The water pipe channel is a building component, which is intended to be installed within a building wall, especially within a concrete-structured wall, in such a way that its first mouth opens onto a top edge of the wall and its second mouth opens onto a surface of the wall approximately at the height of a plumbing fixture to be mounted on the wall. Along the water pipe channel a plastic domestic water pipe can be extended by way of the second mouth to the plumbing fixture.

In one preferred embodiment for a water pipe channel of the invention, the water pipe channel's length is adjustable. Preferably, the water pipe channel comprises a first channel member and a second channel member, said first and second channel members being connected telescopically to each other in such way that the first mouth is included in the first channel member and the second mouth is included in the second channel member.

As the water pipe channel's length changes, the distance between the first mouth and the second mouth changes. Typically, the water pipe channel is installed in a wall in such a way that the first mouth opens onto a top edge of the wall and the second mouth opens at or below a plumbing fixture to be mounted on the wall. Depending on the type of plumbing fixture, its customary installation height on the wall surface varies. In addition, there are differences between buildings in terms of a building's room heights and thereby also in the heights of its walls. The adjustment possibility of the water pipe channel's length enables the use of one and the same water pipe channel in various building types and in the installation of domestic water pipes extended to various plumbing fixtures.

In a second preferred embodiment for a water pipe channel of the invention, the smallest distance of the outer surface of a wall of the water pipe channel segment between the first end and the enlargement portion from a plane defined by the edges of the first mouth and the second mouth is more than 25 mm, preferably more than 40 mm, most preferably more than 50 mm. The water pipe channel is intended to be installed in a wall in such a way that the water pipe channel's straight segment between its first end and enlargement portion is substantially parallel to the wall surface. Hence, the water pipe channel settles clearly deep inside the wall and the fastening screws used in the installation of plumbing fixtures do not reach the water pipe channel.

In a third preferred embodiment for a water pipe channel of the invention, the water pipe channel segment between the first end and the enlargement portion is provided with at least one support leg whose end is substantially flush with a plane defined by the edges of the first mouth and the second mouth. It is by virtue of the support legs that the water pipe channel can be positioned in such a way inside casting formworks used in the construction of concrete walls that the water pipe channel is propped by the support legs and the edges of the mouths against a mold surface of the casting formwork.

In yet another preferred embodiment for a water pipe channel of the invention, the water pipe channel segment between the first mouth and the enlargement portion has a cross-section whose width is substantially double with respect to the cross-section's height. It is by virtue of the water pipe channel's cross-sectional shape that thereinside can be easily fitted side by side two plastic domestic water pipes present in a protective pipe.

In yet another preferred embodiment for a water pipe channel of the invention, said enlargement portion includes a back wall for the attachment of at least one angle cock box. Depending on a plumbing fixture, the enlargement portion is fitted either with one or two angle cock boxes. Thus, the enlargement portion must be large enough to accommodate thereinside a desired number of angle cock boxes at a suitable distance from each other, and the second mouth must be large enough to enable easy placement of the angle cock boxes. Preferably, the back wall is provided with a strengthening piece for a screw attachment of the angle cock box. The strengthening piece can be made of a material which allows the fastening screw for angle cock boxes to be fixedly screwed therein without the predrilling of fastening holes.

In yet another preferred embodiment for a water pipe channel of the invention, the distance of the back wall from a plane defined by the edges of the second mouth is smaller than the largest distance of the wall of a segment between the water pipe channel's first end and enlargement portion from a plane defined by the edges of the first mouth and the second mouth. In this embodiment, the back wall of a fixedly wall-mounted water pipe channel's enlargement portion and the angle cock boxes attachable thereto hence settle closer to the wall surface, thereby facilitating the attachment of plumbing fixtures to the angle cock boxes.

In yet another preferred embodiment for a water pipe channel of the invention, the second mouth has its edge provided with a support member for supporting a protection plate that covers the second mouth. Preferably, said support member is a collar present on an internal surface of the second mouth and at a distance equal to the protection plate's thickness from a plane defined by the edge of the second mouth. The second mouth-covering protection plate can be in its position while the water pipe channel is being installed and the wall is being constructed, whereby the protection plate prevents soiling of the water pipe channel's internal parts. The protection plate is removed when the angle cock boxes and domestic water pipes are installed inside the water pipe channel. After the installations, the protection plate can be refixed in place and the protection plate can be formed with penetration holes for installation connectors intended for plumbing fixtures and attachable to angle cock boxes. The external surface of a fixedly installed protection plate settles in cast-in-place concrete walls in a position substantially flush with the wall surface, whereby the smoothing putty intended for wall surface, the moisture insulation, and the actual wall coating can be applied on top of the protection plate. Alternatively, the protection plate can be completely excluded, in which case the enlargement portion is filled by fill plastering after the installation of angle cock boxes and domestic water pipes.

In yet another preferred embodiment for a water pipe channel of the invention, the enlargement portion has an internal surface of its wall provided with at least one gripping tongue for taking hold of the angle cock box.

It is a benefit of the invention that it expedites domestic plumbing installation processes, especially in buildings with concrete-structured walls.

Another benefit of the invention is provided by savings created in the material costs of domestic water pipes as expensive copper pipes can be replaced by using less expensive plastic pipes.

A further benefit of the invention is a reduced risk of leakage damage, since the number of joints and extensions for domestic water pipes is remarkably reduced and the domestic water pipes are located deeper in the wall structure beyond the reach of fastening screws used for the fixtures.

The invention will now be described in detail. In the description, reference is made to the accompanying drawings, in which
fig. 1a shows by way of example one water pipe channel according to the invention in a front view,
fig. 1b shows in a side view the water pipe channel depicted in fig. 1a,
fig. 2 shows the water pipe channel depicted in figs. 1a and 1b when installed in a concrete wall casting formwork,
fig. 3a shows in a cross-section one concrete wall which contains a water pipe channel according to the invention,
fig. 3b shows in a front view a part of the concrete wall depicted in fig. 3a,
fig. 4a shows one preferred embodiment for a water pipe channel according to the invention in a side view and
fig. 4b shows in a front view the embodiment depicted in fig. 4a,
fig. 5a shows a second preferred embodiment for a water pipe channel according to the invention in a side view,
fig. 5b shows in a front view the embodiment depicted in fig. 5a and
fig. 5c shows in a cross-section view the embodiment depicted in figs. 5a and 5b.

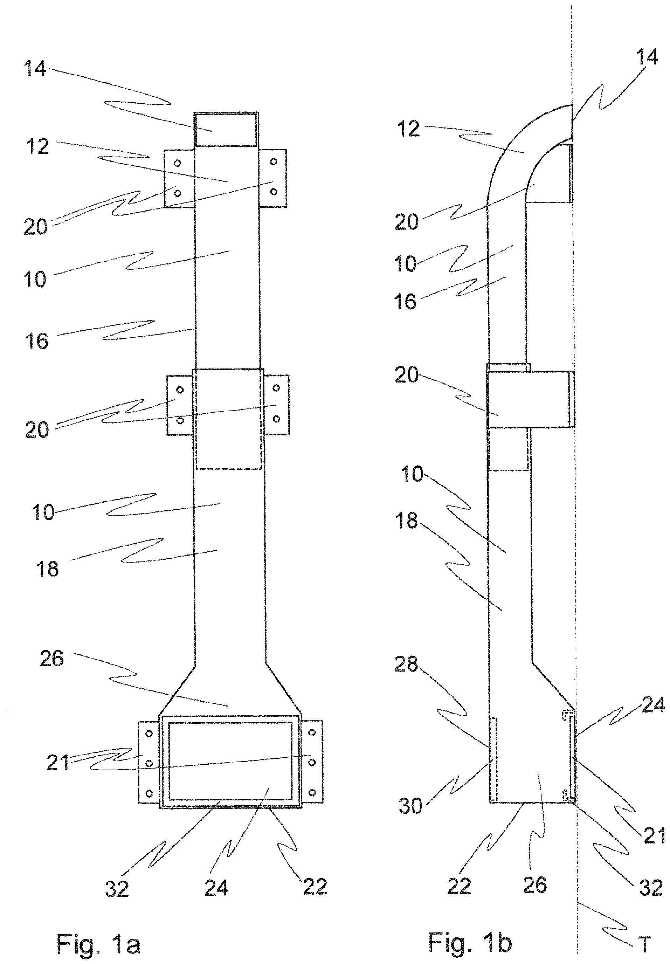

Fig. 1a shows by way of example one water pipe channel according to the invention in a front view and fig. 1b shows the same water pipe channel in a side view. In the following, both figures will be described simultaneously.

The water pipe channel comprises a first tubular channel member 16 and a second tubular channel member 18, each of which includes a cross-sectionally rectangular, straight tubular segment. The tubular segment has a cross-sectional width which is substantially double with respect to its cross-sectional height. The channel members' straight tubular segments are similar in shape, but the external dimensions of the first channel member's wall 10 are slightly smaller than the internal dimensions of a wall 10 of the second channel member's tubular segment. The first channel member's second end is fitted inside a first end of the second channel member, such that the channel members are connected telescopically to each other. Between the walls of the nested channel members is left only a clearance enabling a lengthwise movement of the channel members relative to each other. The water pipe channel's wall is manufactured from a plastic material in such a way that both channel members are substantially rigid, shape-retaining components.

A first end of the first channel member 16, being likewise a first end 12 of the entire water pipe channel, is arcuate in shape. The channel member's arcuate portion has at its end a first mouth 14 whose shape is identical to the channel member's cross-sectional shape. The second channel member 18 has its second end, being likewise a second end 22 of the entire water pipe channel, provided with a box-shaped enlargement portion 26 whose width is substantially larger than the width of the straight tubular segment. The enlargement portion is provided with an substantially flat back wall 28 which is flush with a rear surface of the tubular segment's wall, and with a front wall which includes a rectangular-shaped second mouth 24 equal in size to the entire front wall. The distance of the enlargement portion's front wall from the enlargement portion's back wall is greater than the distance between the front surface and the rear surface of the tubular segment's wall. The edges of the first mouth 14 and those of the second mouth 24 settle on a common imaginary plane T. It is by virtue of a telescopic connection of the first and second channel members that the water pipe channel's length can be changed, thereby changing the mutual distance between the first and second mouths. In figs. 1a and 1b, the first and second mouths are opening in the same direction. The first channel member can also be fitted inside the second channel member in a position rotated 180 degrees around its longitudinal axis, whereby the first and second mouths open up in opposite directions.

On either side of the first channel member's 16 first end, close to the first mouth 14, is a support leg 20 which attaches by its first end to a side face of the first channel member's wall and whose second end extends to the imaginary plane T defined by the first and second mouths. Respectively, on either side of the second channel member's first end is a support leg 20, which attaches by its first end to a side face of the second channel member's wall and whose second end extends to the imaginary plane T defined by the first and second mouths. On a wall of the enlargement portion 26, on either side of the second mouth, is a base plate 21 which settles on the same imaginary plane T.

Inside the enlargement portion26, on an internal surface of the back wall 28, is a plate-like strengthening piece 30 which functions as a mounting base for angle cock boxes, not shown in the figures. The strengthening piece has a function of providing a reliable and solid base into which the fastening screws for angle cock boxes are easy to drill in a fixed manner, such that the points of the fastening screws do not extend through the enlargement portion's back wall. The second mouth, present on a front wall of the enlargement portion, has along its edges a support member in the form of a collar 32, against which can be placed and to which can be attached a protection plate that covers the mouth (protection plate is not shown in the figures). The protection plate's thickness can be selected to be substantially equal to the distance of the collar from a plane defined by the second mouth's edge, whereby the protection plate has its surface settling on the imaginary plane T.

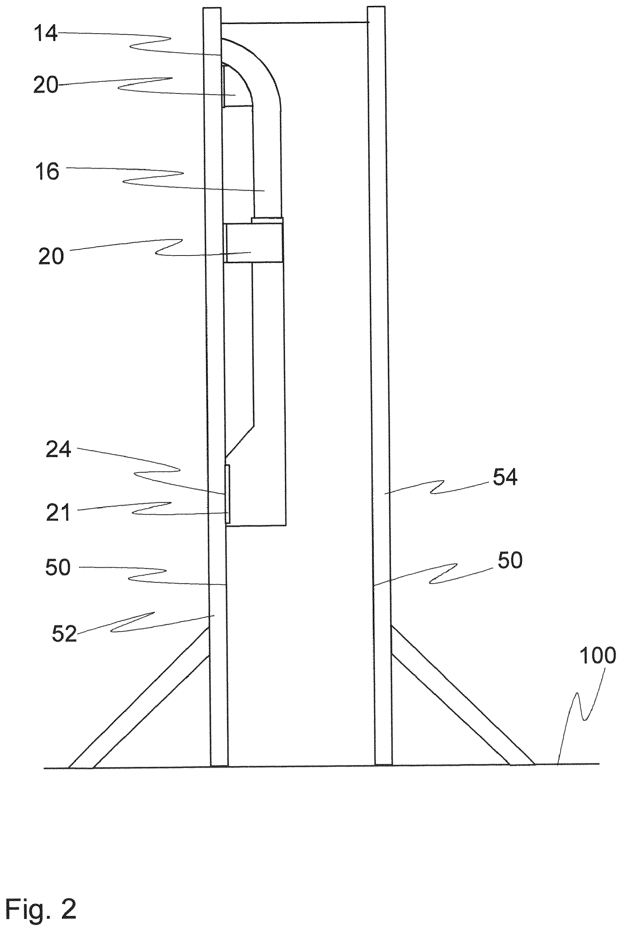

Fig. 2 shows the water pipe channel depicted in figs. 1a and 1b after being installed in a concrete wall casting mold. The casting mold presented in fig. 2 is a casting mold, which is used in the production of so-called cast-in-place concrete walls and which comprises a first wall formwork 52 and a second wall formwork 54, both with a smooth mold surface 50. The wall formworks are propped to an upright position on top of a base 100, e.g. upon the top edge of a building's floor or foundation, and between the wall formworks is poured fresh concrete. After the concrete has set, the wall formwork is dismantled.

The water pipe channel according to the invention is fastened to the mold surface of a first and/or second wall formwork during the process of erecting the wall formworks prior to the pouring of concrete. The water pipe channel is fastened to the mold surface in such a way that the first mouth 14 and the second mouth 24 settle against the mold surface. During the installation process, the second mouth can be covered with a protection plate. A correct position for the water pipe channel in a lateral direction of the wall is determined from construction drawings. In a vertical direction of the wall, the first mouth is installed close to a top edge of the wall. The second mouth's location in a vertical direction of the wall depends on which plumbing fixture the water pipe channel is conducted to. For example, shower mixer taps are installed at a height of 100 cm from floor level. The water taps for WC seats are installed at a height of 25 cm from floor level and the domestic water pipes for a kitchen water supply point are installed at a height of 75 cm from floor surface. Thus, the second mouth installation height is determined by the type of plumbing fixture. By virtue of the telescopic design of a water pipe channel according to the invention, the water pipe channel's length can be adjusted and the second mouth can always be attached at the appropriate installation height, even though the building has varying room heights and types of plumbing fixtures.

The water pipe channel is fastened to a mold surface by means of support legs 20 included in a first end of the first channel member 16, support legs 20 included in a first end of the second channel member 18, and by means of base plates 21 present on side surfaces of the enlargement portion's wall. The support legs, used for propping up the second channel member, sustain the water pipe channel's straight segment at a constant distance from the mold surface, in other words from the future wall surface of a concrete wall. After installation of the channel member, into a space between the wall formworks fresh concrete mass is poured and compacted by vibration. The water pipe channel is sufficiently rigid to retain its shape substantially unchanged while being subjected in the concrete casting and compacting process to a pressure generated by fresh concrete surrounding the channel member.

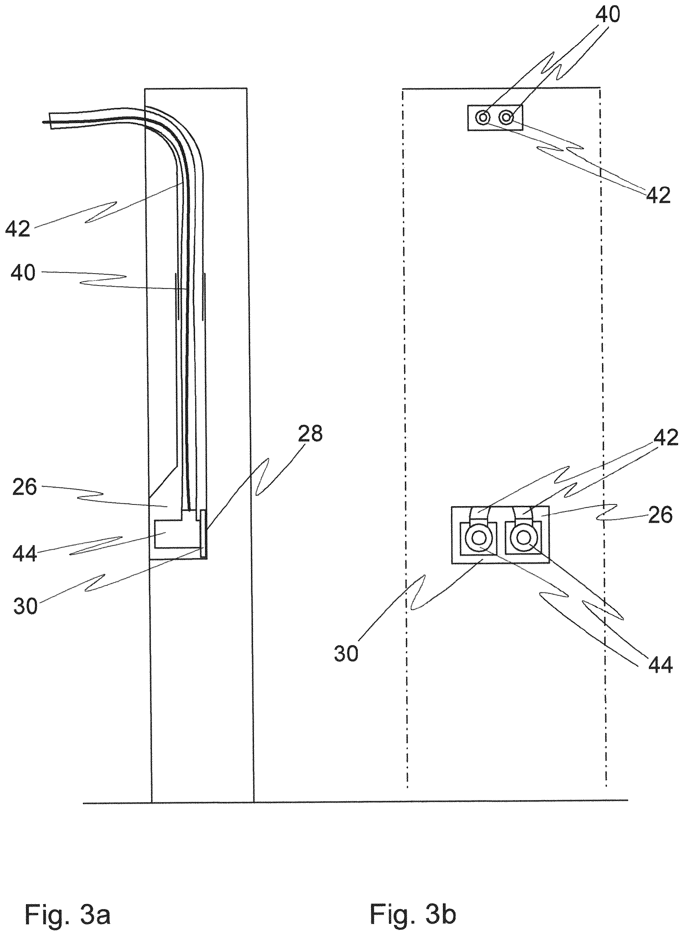

Fig. 3a shows, by way of example in a cross-section, one concrete wall which carries a water pipe channel of the invention, and fig. 3b shows a part of the same concrete wall in a front view. In the following, both figures will be described simultaneously. The figures illustrate a concrete wall after the removal of wall formworks from various sides of the wall. In figs. 3a and 3b, the strengthening piece 30 present on a back wall 28 of the water pipe channel's enlargement portion 26 has two angle cock boxes 44 fastened thereto by screw attachment. In the water pipe channel is installed a protective pipe 42 and inside the latter a domestic water pipe 40. The domestic water pipe and the protective pipe are connected by a first end thereof to the angle cock box and the second ends thereof are extended to a manifold, not shown in the figures. The arcuate shape of the water pipe channel's first end, the enlargement portion's depth, and the support legs' lengths can be dimensioned in such a way that the water pipe channel's straight segment shall end up at an appropriate distance from the concrete wall surface. This distance should preferably be not less than 25 cm, preferably not less than 40 mm, and most preferably not less than 50 mm. By means of the above-mentioned dimensioning of the water pipe channel's components can be ensured that the domestic water pipes present inside the water pipe channel are always at a sufficient distance from the wall surface, whereby the fastening screws for fixtures, such as shower rails or kitchen fixtures, do not extend far enough to pierce the water pipes.

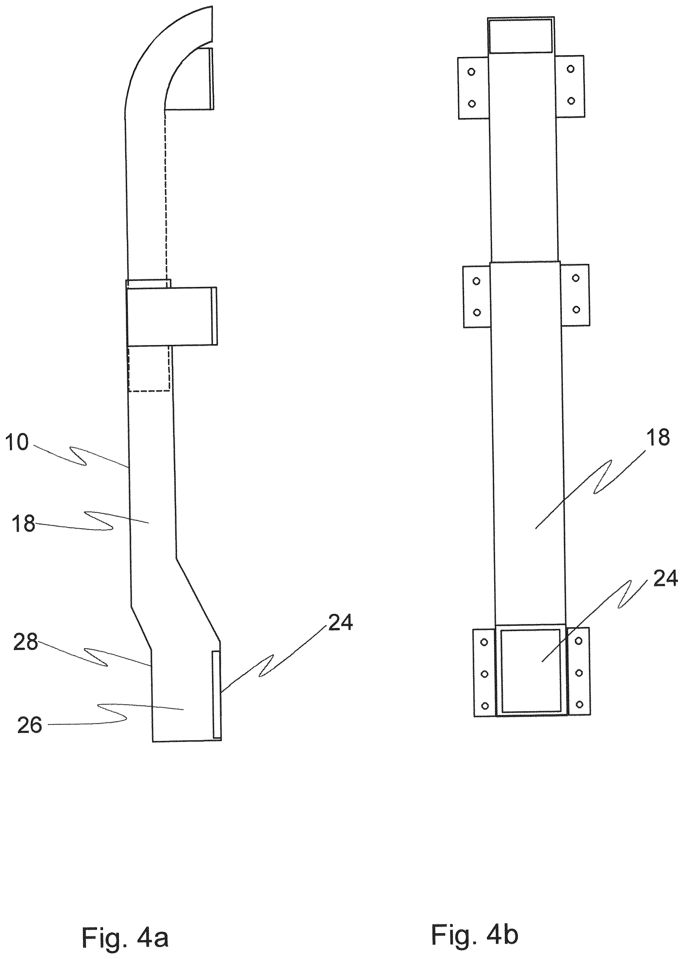

Fig. 4a shows, by way of example, one preferred embodiment for a water pipe channel according to the invention in a side view, and fig. 4b shows the same embodiment in a front view. In the following, both figures will be described simultaneously.

The embodiment shown in figs. 4a and 4b includes all the same structural components as the previously described water pipe channel and the structural components are indicated with the same terms and reference numerals. The embodiment presented in the figures deviates from the above-described invention in the sense that the back wall 28 of the enlargement portion 26 is closer to the plane defined by the edge of the second mouth 24 than is the rear surface of the wall 10 of the second channel member's 18 tubular segment. Therefore, the enlargement portion's depth is smaller than what it is in the invention described in figs. 1a-3b. A benefit gained by this water pipe channel embodiment is that the angle cock boxes are positioned in a wall closer to the wall surface, making it easier to fasten plumbing fixtures to angle cock boxes. In addition, the embodiment presented in the figures deviates from the above-described invention in the sense that the enlargement portion's width and that of the mouth 24 are substantially smaller than in the invention described in figs. 1a-3b. The enlargement portion illustrated in figs. 4a and 4b is indeed only dimensioned for one angle cock box, in other words there is just one domestic water pipe extended into the enlargement portion. This type of water pipe channel is applicable e.g. to conducting domestic water pipes for WC seats.

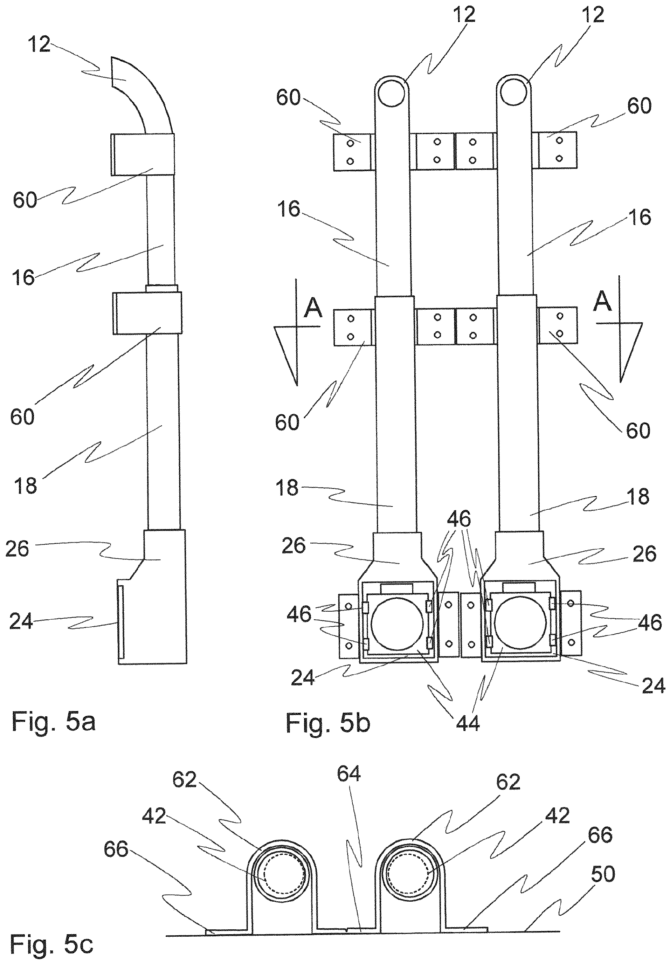

Fig. 5a shows by way of example another preferred embodiment for a water pipe channel according to the invention in a side view, fig. 5b showing the same in a front view, and fig. 5c in a cross-sectional view, sectioned along a section plane A-A. In the following, all the foregoing figures will be described simultaneously.

The embodiment shown in figs. 5a, 5b and 5c includes all the same structural components as the previously described water pipe channel and the structural components are indicated with the same terms and reference numerals. The embodiment presented in the figures deviates from the above-described invention in the sense that the water pipe channel is round in its cross-sectional shape except in the location of an enlargement portion 26. The cross-sectionally round segment's diameter is selected in such a way that thereinside fits one conventional protective pipe 42 used in the installation of plastic domestic water pipes, such that between the protective pipe's wall and that of the water pipe channel is left a sufficient installation clearance (fig. 5c). The enlargement portion is dimensioned for a single angle cock box in such a way that the dimensions of its interior are just slightly larger than the external dimensions of an angle cock box to be fitted thereinside. When both a hot domestic water pipe and a cold domestic water pipe are led to a same plumbing fixture, the wall will be fitted with two water pipe channels side by side as presented in fig. 5b. The enlargement portion has opposite side faces of its walls provided with elastic gripping tongues 46. The angle cock box is installed in the enlargement portion simply by inserting it in a correct position into the enlargement portion, whereby the gripping tongues take hold of the edges of the angle cock box, locking the angle cock box in place. After the angle cock box has been installed, the empty space within the enlargement portion can be filled with polyurethane or putty mass. The enlargement portion's second mouth 24 is not intended to be covered with a protection plate and, thus, no collar is needed along the mouth's edge for the attachment of a protection plate.

The preferred water pipe channel embodiment depicted in figs. 5a, 5b and 5c does not include support legs fixedly attached to a first channel member 16 and to a second channel member 18. Instead of support legs, the channel members are propped against and secured to a mold surface 50 of the wall formworks with separate channel holders 60. The channel holder is a shaped strap type element, which includes two co-directionally opening U-shaped bracket members 62, an intermediate part 64 interconnecting the ends of the bracket members' parallel sides, and edge parts 66 at the ends of the bracket members' outermost sides. The edge parts and the intermediate parts settle on a substantially common imaginary plane. The channel holders are fastened by the intermediate part and the edge parts to the mold surface 50 with screw attachment. The intermediate part and the edge parts have previously made holes for fastening screws. The number of channel holders used for fastening a water pipe channel can be selected at will. In practice, the use of channel holders is advisable at least at the junction of first and second channel members and in the proximity of the first channel member's first end 12.

A particular benefit achieved by the embodiment shown in figs. 5a, 5b and 5c is that the domestic water pipes to be extended e.g. to a shower mixer tap are not placed on a vertical line common with a centerline of the shower mixer. Hence, the most natural attachment point for a shower rail is established between the water pipe channels and the shower rail fastening screws do not puncture the domestic water pipes present in the water pipe channels. Accordingly, the embodiment enables the water pipe channels to be positioned closer to a wall surface, e.g. in such a way that the water pipe channel's wall has its most distant surface at a depth of not more than 50 mm from the wall surface.

The embodiment shown in figs. 5a, 5b and 5c includes a first channel member 16 and a second channel member 18 with straight tubular segments thereof connecting telescopically to each other. Another way of implementing the water pipe channel is such that the first channel member is a standard-length tubular segment and the second channel member comprises just an enlargement portion. The enlargement portion has its wall provided with a coupling sleeve into which the end of an appropriately cut-to-size first channel member is fitted in place. The coupling sleeve may include a packing by means of which the joint becomes watertight.

The intermediate part 64 of a channel holder used in the process of securing the water pipe channel has its length dimensioned in such a way that the holder has its bracket members at a distance from each other appropriate for the installation of domestic water pipes to be extended to a shower mixer tap. The intermediate part 64 may include a weakening point at which the channel holder breaks into two components upon bending the holder. The lengths of a holder's edge parts 66 can be dimensioned in such a way that, when the ends of the edge parts of cut-off holder pieces are set against each other, the bracket members will settle at a distance from each other appropriate for domestic water pipes to be extended to basin faucets.

The water pipe channel according to the invention is particularly useful in construction projects, wherein concrete-structured walls are fitted with plastic domestic water pipes. The wall structure can be manufactured on site by a cast-in-place process or it can be prefabricated at an element factory for a wall element which is transported to the construction site. The wall elements are manufactured at element factories generally in a horizontal position and the casting mold for wall elements has only one mold surface constituting a wall surface. Hence, the water pipe channels are positioned in the casting mold in such a way that the mouths thereof either settle against the horizontal mold surface of a wall element casting mold or open up onto a floated top surface of the molded concrete mass layer. The water pipe channel according to the invention can also be used in frame-structured walls, especially in frame-structured large elements.

Described above are a few preferred embodiments for a water pipe channel of the invention. The invention is not limited to the foregoing solutions, but the inventive concept can be applied in a variety of ways within the limits defined by the claims.

## Claims

1. A water pipe channel, including a wall (10), a first end (12) with a first mouth (14), and a second end (22) with a second mouth (24) and an enlargement portion (26) into which the second mouth (24) opens, and said second mouth (24) is substantially larger than the first mouth (14), **characterized in that** the water pipe channel segment between the first end (12) and the enlargement portion (26) is substantially straight and rigid.

2. The water pipe channel according to claim 1, **characterized in that** its length is adjustable.

3. The water pipe channel according to claim 1 or 2, **characterized in that** it comprises a first channel member (16) and a second channel member (18), said first and second channel members (16, 18) being connected telescopically to each other in such way that the first mouth (14) is included in the first channel member (16) and the second mouth (24) is included in the second channel member (18).

4. The water pipe channel according to any of claims1-3, **characterized in that** the smallest distance of the outer surface of a wall (10) of the water pipe channel segment between the first end (12) and the enlargement portion (26) from a plane defined by the edges of the first mouth (14) and the second mouth (24) is more than 25 mm, preferably more than 40 mm, most preferably more than 50 mm.

5. The water pipe channel according to any of claims1-4, **characterized in that** the water pipe channel segment between the first end (12) and the enlargement portion (26) is provided with at least one support leg (20) whose end is substantially flush with a plane defined by the edges of the first mouth (14) and the second mouth (24).

6. The water pipe channel according to any of claims1-5, **characterized in that** the water pipe channel segment between the first mouth (14) and the enlargement portion (26) has a cross-section whose width is substantially double with respect to the cross-section's height.

7. The water pipe channel according to any of claims1-6, **characterized in that** said enlargement portion (26) includes a back wall (28) for the attachment of at least one angle cock box (44).

8. The water pipe channel according to claim 7, **characterized in that** the back wall (28) is provided with a strengthening piece (30) for a screw attachment of the angle cock box (44).

9. The water pipe channel according to claim 7 or 8, **characterized in that** the distance of the back wall (28) from a plane defined by the edges of the second mouth (24) is smaller than the largest distance of the wall (10) of a segment between the water pipe channel's first end (12) and enlargement portion (26) from a plane defined by the edges of the first mouth (14) and the second mouth (24).

10. The water pipe channel according to any of claims1-9, **characterized in that** the second mouth (24) has its edge provided with a support member for supporting a protection plate that covers the second mouth (24).

11. The water pipe channel according to claim 10, **characterized in that** said support member is a collar (32) present on an internal surface of the second mouth (24), said collar (32) being at a distance equal to the protection plate's thickness from a plane defined by the edge of the second mouth (24).

12. The water pipe channel according to any of claims1-9, **characterized in that** the enlargement portion (26) has an internal surface of its wall (10) provided with at least one gripping tongue (46) for taking hold of the angle cock box (44).
